# EUROPEAN PATENT SPECIFICATION

(11) **EP 4 174 998 B1**
(45) Date of publication and mention of the grant of the patent: **07.10.2026**
(21) Application number: 22771714.7
(22) Date of filing: 14.03.2022
(51) Int. Cl.: H01M 10/04, H01M 50/403, H01M 50/46, H05H 1/48, H05H 1/24

(54) **PLASMA GENERATION APPARATUS, AND ELECTRODE ASSEMBLY MANUFACTURING EQUIPMENT INCLUDING SAME**
PLASMAERZEUGUNGSVORRICHTUNG UND AUSRÜSTUNG ZUR HERSTELLUNG EINER ELEKTRODENANORDNUNG DAMIT
APPAREIL DE GÉNÉRATION DE PLASMA ET ÉQUIPEMENT DE FABRICATION D'ENSEMBLE D'ÉLECTRODES LE COMPRENANT

(30) Priority: 15.03.2021 KR 20210033649
(43) Date of publication of application: 03.05.2023
(73) Proprietor: LG Energy Solution, Ltd., Seoul 07335 (KR)
(72) Inventor: LEE, Sang Kyun, Daejeon 34122 (KR); KANG, Kyoung Won, Daejeon 34122 (KR); LEE, Yong Tae, Daejeon 34122 (KR)
(74) Representative: Goddar, Heinz J.
(86) International application number: PCT/KR2022/003551
(87) International publication number: WO 2022/197048

(56) References cited:
- KR-A- 20120 111 078
- KR-A- 20180 006 324
- KR-A- 20180 051 072
- KR-A- 20190 000 589
- KR-B1- 101 625 602

## Description

### CROSS-REFERENCE TO RELATED APPLICATION

The present application claims the benefit of the priority of Korean Patent Application Nos. 10-2021-0033649, filed on March 15, 2021, and 10-2022-0031450, filed on March 14, 2022.

### TECHNICAL FIELD

The present invention relates to a plasma generation device and a facility for manufacturing an electrode assembly including the same, and more particularly, to a plasma generation device, which is capable of improving adhesion, impregnation properties, and discharge properties at the same time, and a facility for manufacturing an electrode assembly including the same.

### BACKGROUND ART

In general, secondary batteries refer to chargeable and dischargeable batteries, unlike primary batteries that is impossible to charge. Such secondary batteries are widely used in high-tech electronic devices such as phones, notebook computers, and camcorders.

The secondary batteries are classified into a can type secondary battery, in which an electrode assembly is embedded in a metal can, and a pouch type secondary battery in which an electrode assembly is embedded in a pouch. A can type secondary battery includes an electrode assembly, a can accommodating the electrode assembly, and a cap assembly mounted in an opening of the can. Also, a pouch type secondary battery includes an electrode assembly and a pouch accommodating the electrode assembly.

On the other hand, the electrode assembly is divided into a jelly-roll type (wound type) electrode assembly, a stack type electrode assembly, and a stack/folding type electrode assembly. Here, the stack/folding type electrode assembly includes a separation sheet and a plurality of radical units stacked through the separation sheet. Each of the radical units has a structure in which a first electrode and a second electrode are alternately stacked with a separator therebetween. Here, the first electrode is a positive electrode, and the second electrode is a negative electrode, and vice versa.

A method for manufacturing the electrode assembly includes a process of supplying a separation sheet, a process of forming an adhesive layer on an entire surface of the separation sheet, a process of disposing a radical unit on the separation sheet, on which the adhesive layer is formed, to adhere to each other, and a process of folding the separation sheet to stack the radical unit.

However, in the method for manufacturing the electrode assembly according to the related art, the adhesive layer may be formed on the entire surface of the separation sheet to significantly improve adhesion between the separation sheet and the radical unit, but there is a problem in that an electrolyte impregnation property and a gas discharge property between the separation sheet and the radical unit are significantly deteriorated.
The prior art relevant to the present invention are given by KR 2012 0111078 A, KR 2019 0000589 A, KR 2018 0051072 A, KR 101 625 602 B1 and KR 2018 0006324 A. It is known from the prior art a manufacturing method of an electrode assembly, comprising a surface treatment step activating a surface of a separator sheet through a corona discharge before arranging a unit cell on the separator sheet for increasing adhesion between the separator sheet and the unit cell. The surface treatment step additionally comprises an air injection step injecting air into a corona discharge electrode plate in order to decrease a temperature of the corona discharge electrode plate.

### DISCLOSURE OF THE INVENTION

### TECHNICAL PROBLEM

To solve the above problems, an object of the present invention is to provide a plasma generation device, in which a patterned adhesive layer is formed on a separation sheet so that the separation sheet and a radical unit pattern-adhere to each other when an electrode assembly is manufactured, thereby improving adhesion between the separation sheet and the radical unit, an electrolyte impregnation property, and a gas discharge property at the same time, and a facility for manufacturing an electrode assembly including the same.

### TECHNICAL SOLUTION

A plasma generation device, which forms a patterned adhesive layer on a surface of a separation sheet, according to the present invention includes: a roller part including a transfer roller configured to transfer the separation sheet and a metal member embedded in the transfer roller; and a plasma generator including a main body disposed to be spaced apart from the transfer roller and provided to be elongated in a width direction of the separation sheet, which is perpendicular to a transfer direction of the separation sheet, a plurality of electrode members disposed in the width direction of the separation sheet and configured to generate plasma on only a surface of the separation sheet, which is disposed at a position facing the metal member, to form the patterned adhesive layer on the surface of the separation sheet, and a guide member configured to fix the plurality of electrode members to the main body, wherein the guide member is detachably coupled to the main body to fix or separate the plurality of electrode members to/from the main body at the same time.

The plurality of electrode members may be slidably movably coupled to the guide member in the width direction of the separation sheet.

A guide groove to which the plurality of electrode members are slidably movably coupled in the width direction of the separation sheet may be formed in an outer surface of the guide member.

Each of the electrode member may include: a coupling part slidably coupled to the guide groove of the guide member; an electrode part configured to generate the plasma on only a surface of the separation sheet disposed at the position facing the metal member; and a connection part configured to connect the coupling part to the electrode part.

The connection part may be detachably coupled to the coupling part.

The guide groove may include: a first groove provided in an outer surface of the guide member; and a second groove provided inside the guide member and connected to the first groove, wherein the second groove has a diameter greater than that of the first groove, wherein the coupling part may include: a support piece which is supported by the guide member and to which the connection part is connected; a coupling bolt inserted up to the second grove via the first groove by passing through the support piece; and a coupling nut inserted into the second groove and coupled to the coupling bolt.

The second groove may be formed to pass in a lateral direction of the guide member, which correspond to the width direction of the separation sheet, so that the coupling nut is inserted.

The main body may further include a support part configured to support the electrode part, wherein the support part may be formed to be elongated in the width direction of the separation sheet and be formed to have a curved surface corresponding to the transfer roller.

A display member on which a scale is displayed in the width direction of the separation sheet may be provided on a surface of the guide member, and the support piece may be adjusted in position according to the scale of the display member.

The plurality of electrode members may include: a first electrode member disposed on each of both ends of the main body in the width direction of the separation sheet; and a second electrode member provided between the first electrode members, wherein the first electrode member and the second electrode member may have lengths different from each other when viewed in the width direction of the separation sheet.

The first electrode member may have a length greater than that of the second electrode member.

The main body may be made of a non-metal material, and the electrode part may be provided as a corona discharge electrode.

The connection part may be provided in two or more and has a cross-section having a circular rod shape.

A facility for manufacturing an electrode assembly according to the present invention includes: a supply device configured to supply a separation sheet; a plasma generation device configured to form a patterned adhesive layer on a surface of the separation sheet supplied by the supply device and prepared by claim 1; a disposition device disposing a radical unit on the surface of the separation sheet, on which the adhesive layer is formed, so that the separation sheet and the radical unit pattern-adhere to each other; a lamination device configured to press the separation sheet and the radical unit to be bonded to each other; and a folding device configured to fold the separation sheet, on which the radical unit is disposed, to stack the radical unit vertically.

### ADVANTAGEOUS EFFECTS

The plasma generation device according to the present invention may include the roller part and the plasma generator to form the patterned adhesive layer on the surface of the separator sheet, and thus, the separation sheet and the radical unit may pattern-adhere to each other to improve the adhesion, the electrolyte impregnation property, and the gas discharge property at the same time. That is, the separation sheet and the radical unit may be improved in adhesion through the adhesion portion between the separation sheet and the radical unit, and the electrolyte impregnation property and the gas discharge property may be improved through the non-adhesion portion between the separation sheet and the radical unit.

### BRIEF DESCRIPTION OF THE DRAWINGS

FIG. 1 is a cross-sectional view illustrating a C-type bicell of a radical unit according to a first embodiment of the present invention.
FIG. 2 is a cross-sectional view illustrating an A-type bicell of the radical unit according to a first embodiment of the present invention.
FIG. 3 is a plan view illustrating a state before an electrode assembly is folded according to the first embodiment of the present invention.
FIG. 4 is a cross-sectional view illustrating a state after the electrode assembly is folded according to the first embodiment of the present invention.
FIG. 5 is a schematic side view illustrating a facility for manufacturing the electrode assembly according to the first embodiment of the present invention.
FIG. 6 is a perspective view illustrating a plasma generator of a plasma generation device according to the first embodiment of the present invention.
FIG. 7 is a front view of FIG. 6.
FIG. 8 is a plan view of FIG. 6,
FIG. 9 is a side view of FIG. 6.
FIG. 10 is a side cross-sectional view of FIG. 6.
FIG. 11 is a plan cross-sectional view of FIG. 6.
FIG. 12 is a side view illustrating a usage state of the plasma generation device according to the first embodiment of the present invention.
FIG. 13 is a plan view illustrating a separation sheet on which a patterned adhesive layer is formed according to the first embodiment of the present invention.
FIG. 14 is a side view illustrating a plasma generation device according to a second embodiment of the present invention.
FIG. 15 is a plan view illustrating a separation sheet on which a pattern adhesive layer is formed according to the second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Electrode assembly according to first embodiment of the present invention]

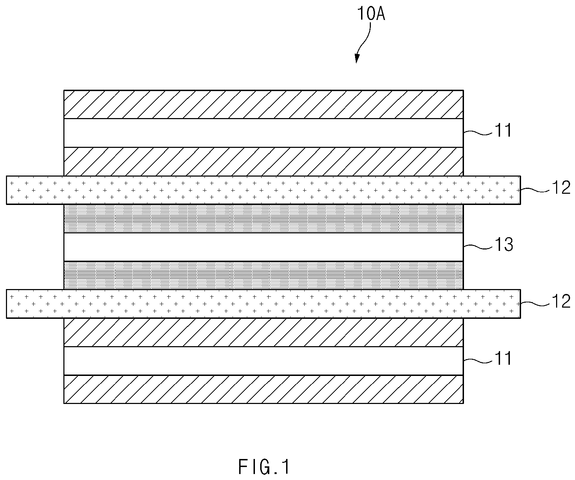

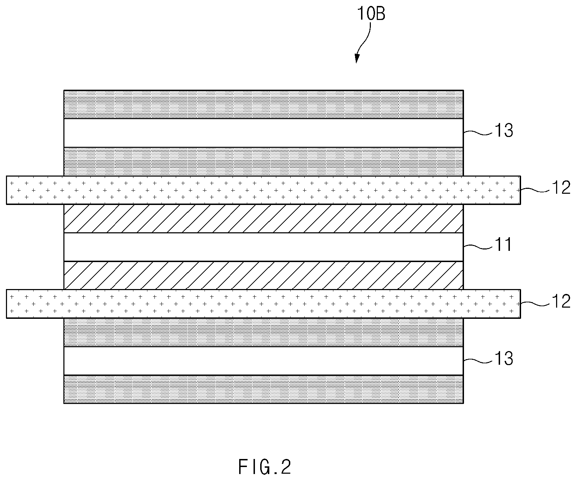

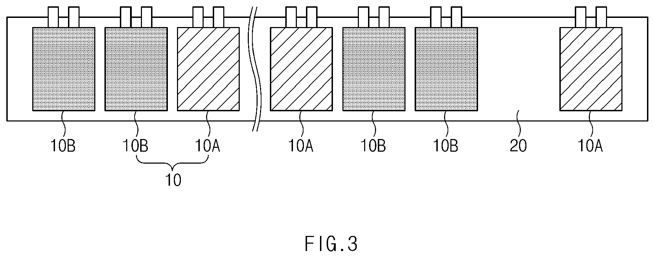

As illustrated in FIGS. 1 to 4, an electrode assembly 1 according to a first embodiment of the present invention includes a radical unit 10, and the radical unit 10 includes a C-type bicell 10A and an A-type bicell 10B. The C-type bicell 10A has a structure in which a positive electrode 11, a separator 12, a negative electrode 13, a separator 12, and a positive electrode 11 are sequentially stacked. The A-type bicell 10B has a structure in which a negative electrode 13, a separator 12, a positive electrode 11, a separator 12, and a negative electrode 13 are sequentially stacked.

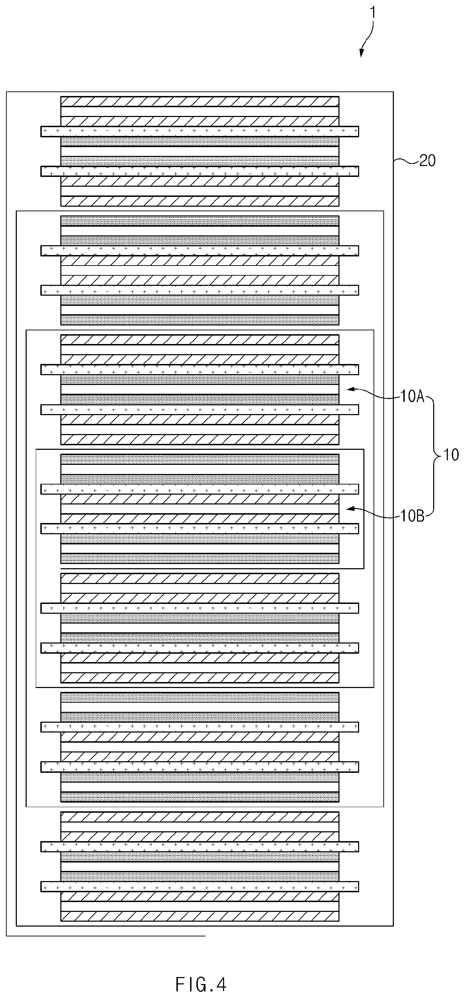

In the radical unit 10 having the stacked structure, the C-type bicell 10A and the A-type bicell 10B may be stacked to face each other with a separation sheet 20 therebetween, thereby manufacturing an electrode assembly 1 as illustrated in FIG. 4.

The electrode assembly 1 as described above is manufactured through a facility for manufacturing an electrode assembly.

### [Facility for manufacturing electrode assembly according to first embodiment of the present invention]

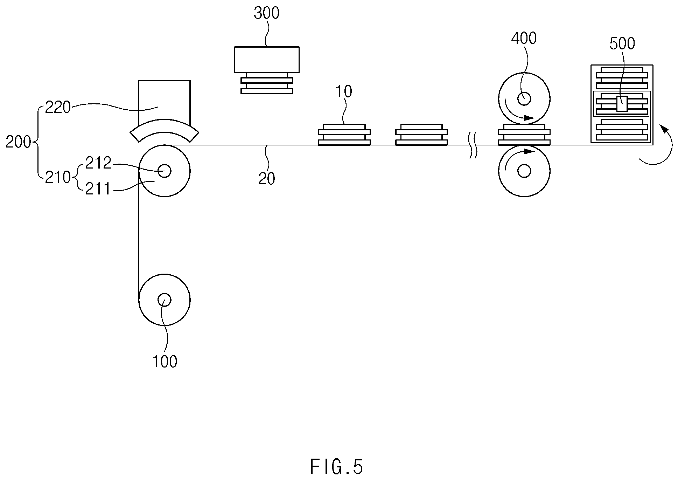

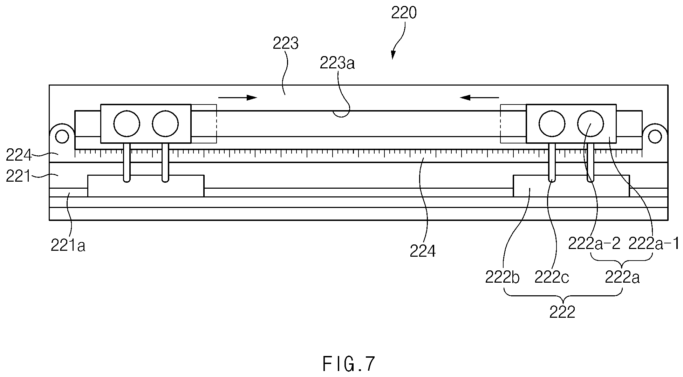

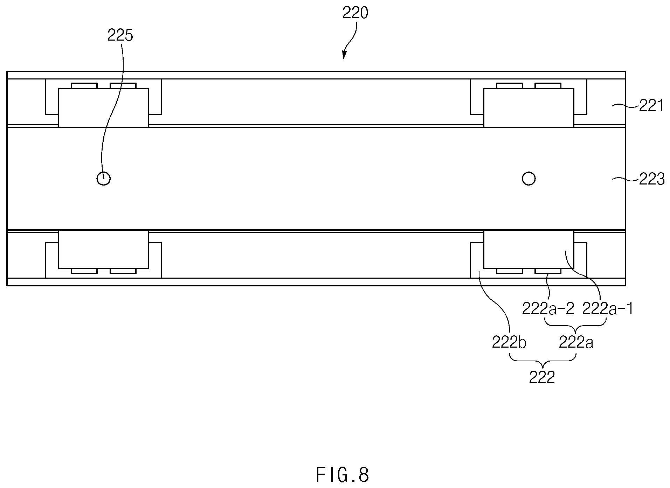

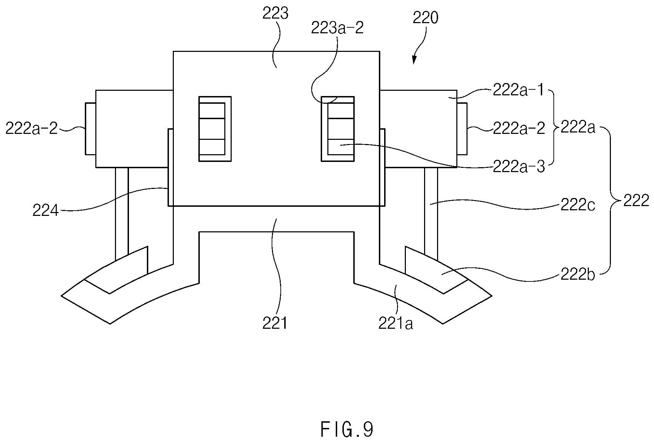

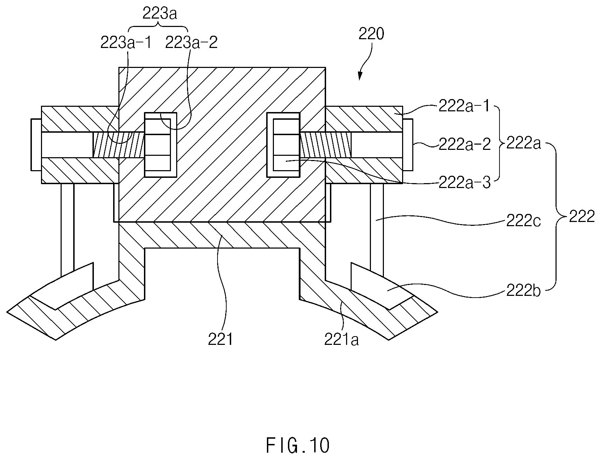

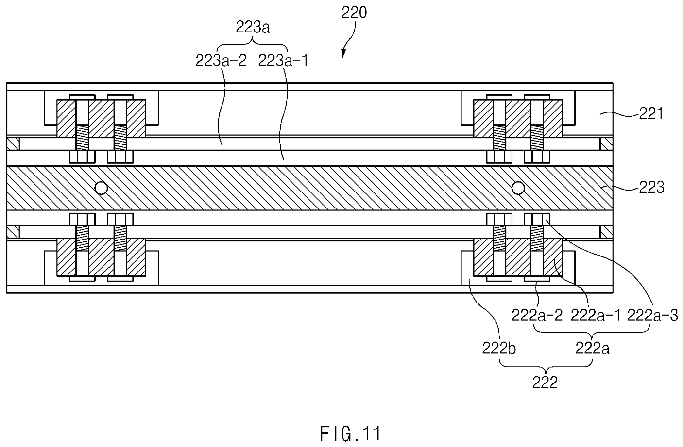

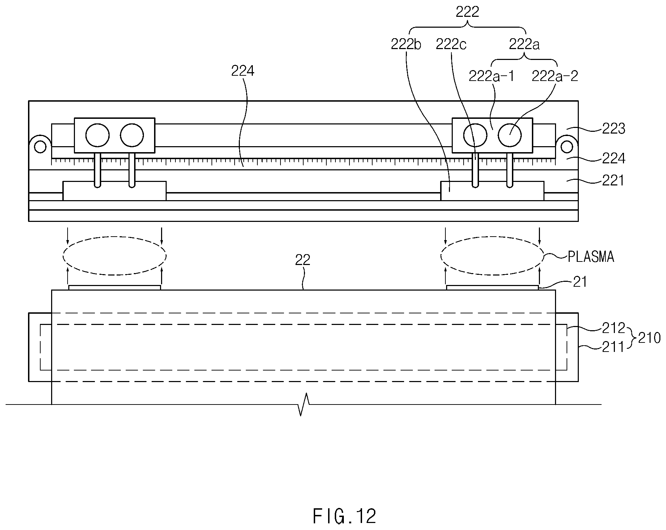

As illustrated in FIGS. 5 to 13, a facility for manufacturing an electrode assembly according to the first embodiment of the present invention includes a supply device 100 supplying a separation sheet 20, a plasma generation device 200 forming an adhesive layer on a surface of the separation sheet 20 supplied by the supply device 100, a disposition device 300 disposing a radical unit 10 on the surface of the separation sheet 20, on which an adhesive layer is formed, so that the separation sheet 20 and the radical unit 10 adhere to each other, a lamination device 400 pressing the separation sheet 20 and the radical unit 10 to be bonded to each other, and a folding device 500 folding the separation sheet 20, on which the radical unit 10 is disposed, to manufacture an electrode assembly 1, in which the radical unit 10 is vertically stacked.

### Supply device

The supply device 100 is configured to supply the separation sheet. That is, the supply device 100 has a roller structure, and when the supply device 100 rotates, the wound separation sheet 20 is unwound to be supplied up to the folding device 500 via the plasma generation device 200, the disposition device 300, and the lamination device 400.

### Plasma generation device

The plasma generation device 200 is configured to form the adhesive layer on the surface of the separation sheet. That is, the plasma generation device 200 generates plasma on the surface (a top surface of the separation sheet when viewed in FIG. 5) of the separation sheet 20 supplied by the supply device to form the adhesive layer on the surface of the separation sheet 20.

### Disposition device

The disposition device 300 is configured to dispose the radical unit on the surface of the separation sheet. That is, the disposition device 300 holds the radical unit 10 stored at a set place and then disposes the radical unit 10 on the surface of the separation sheet on which the adhesive layer is formed. Then, the radical unit 10 adheres to the separation sheet 20 by the adhesive layer.

### Lamination device

The lamination device 400 is configured to bond the radical unit to the separation sheet. That is, the lamination device 400 is provided as a pair of rolling rollers and presses the radical unit 10 and the separation sheet 20, which pass through the disposition device 300, to bond the radical unit 10 to the separation sheet 20.

### Folding device

The folding device 500 is configured to manufacture the electrode assembly. That is, the folding device 500 folds the separation sheet 20, on which the radical unit 10 is disposed, to stack the radical unit 10 in the vertical direction. Then, as illustrated in FIG. 4, the electrode assembly 1 may be manufactured.

In the facility for manufacturing the electrode assembly according to the first embodiment of the present invention, the plasma generation device 200 may be improved to improve the adhesion between the radical unit 10 and the separation sheet 20, the electrolyte impregnation property, and the gas discharge property, thereby manufacturing a high-quality electrode assembly.

That is, in the facility for manufacturing the electrode assembly according to the first embodiment of the present invention, the patterned adhesive layer may be formed on the surface of the separation sheet through the plasma generation device 200 so that the radical unit and the separation sheet pattern-adhere to each other. As a result, the adhesion may be improved through an adhesion surface between the radical unit and the separation sheet, and the electrolyte impregnation property and the gas discharge property may be improved through the non-adhesion surface between the radical unit and the separation sheet.

For example, the plasma generation device 200 is configured to form the patterned adhesive layer on the surface of the separation sheet 20 supplied through the supply device 100 and includes a roller part 210 and a plasma generator 220.

The roller part 210 supports a bottom surface of the separation sheet 20 supplied through the supply device 100 and includes a transfer roller 211 transferring the separation sheet 20 during rotation and a metal member 212 embedded in the transfer roller 211.

The plasma generator 220 includes a main body 221 formed to be spaced apart from the transfer roller 211, a plurality of electrode members 222 generating plasma on only the surface of the separation sheet 20 disposed to face the metal member 212 to form the patterned adhesive layer 21 on the surface of the separation sheet 20, and a guide member 223 fixing the plurality of electrode members 222 to the main body 221.

the main body 221 is disposed on the separation sheet 20 supported by the transfer roller 211 and formed to be elongated along a width direction of the separation sheet 20, which is perpendicular to a transfer direction of the separation sheet 20. That is, the main body 221 and the transfer roller 211 have directions and lengths corresponding to each other.

Here, the main body 221 may be made of a non-metal material.

Each of the electrode member 222 is disposed on an outer surface of the main body 221 corresponding to the transfer direction of the separation sheet and has a structure, in which the plurality of electrode members 222 are arranged at a set interval in a longitudinal direction of the main body 221, which correspond to the width direction of the separation sheet.

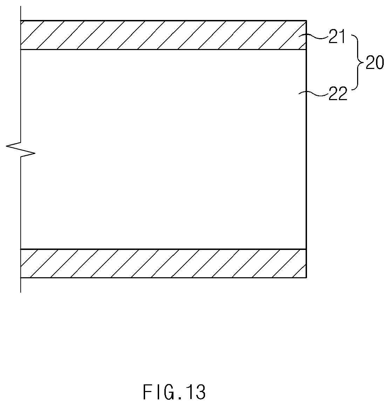

That is, referring to FIG. 13, plasma is generated on only the surface of the separation sheet disposed between the plurality of electrode members 222 and the metal member 212, and thus, the adhesive layer 21 may be formed on only the surface of the separation sheet 20 disposed between the electrode members 222 and the metal member 212. Of course, since the plasma is not generated on the surface of the separation sheet 20, on which the electrode member is not disposed, a non-adhesion layer 22 is formed. Thus, the patterned adhesive layer 21 is formed on the surface of the separation sheet 20. As a result, the separation sheet 20 has a pattern in which the adhesive layer 21 and the non-adhesive layer 22 are alternately formed in the width direction. In other words, the patterned adhesive layer 21 is formed on the surface of the separation sheet 20.

The electrode member 222 may be a corona discharge electrode. The plasma may be stably generated between the metal member 252 and the main body 253a through the corona discharge electrode.

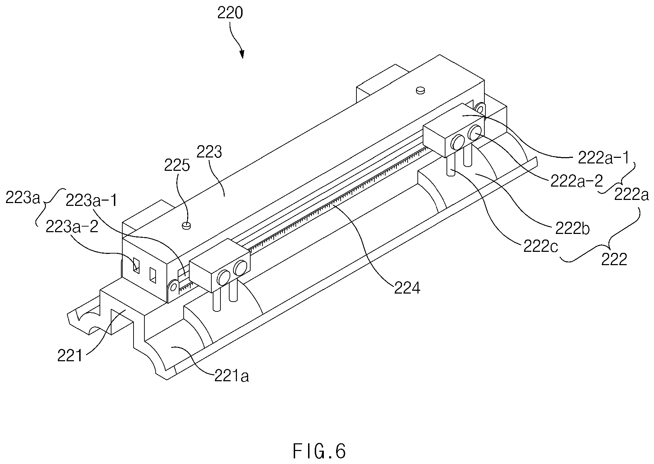

The guide member 223 is configured to fix the plurality of electrode members to the main body and is provided on a top surface of the main body 221 when viewed in FIG. 6. A guide groove 223a formed to be elongated in the width direction of the separation sheet 20 is formed in each of both surfaces (left and right surfaces when viewed in FIG. 6) corresponding to the transfer direction of the separation sheet 20. The plurality of electrode members 222 may be installed in the guide grooves 223a to fix the plurality of electrode members 222 to the main body 221.

Particularly, the guide member 223 may be detachably coupled to the main body 221 to fix or separate the plurality of electrode members to/from the main body 221 at the same time. For example, the guide member 223 may be detachably coupled to the main body 221 through a fixing member 225. That is, the fixing member 225 is provided as a fixing bolt, and the fixing bolt passes through the guide member and is coupled to the main body 221. Thus, when the fixing bolt is tightened, the guide member 223 and the main body 221 may be coupled without being separated from each other, and when the fixing bolt is loosened, the guide member 223 may be separated from the main body. Thus, when the guide member is separated from the main body, the plurality of electrode members may be simultaneously separated from the main body, and when the guide member is coupled to the main body, the plurality of electrode members may be simultaneously fixed to the main body. As a result, it is possible to improve efficiency of maintenance and operation.

Here, the guide groove 223a is formed to be elongated along the width direction of the separation sheet 20, and thus, each of the plurality of electrode members 222 is slidably movably coupled to the guide groove 223a of the guide member 223 in the width direction of the separation sheet 20. As a result, a position of each of the plurality of electrode members 222 in the width direction of the separation sheet 20 may be adjusted, and a position of the adhesive layer formed on the separation sheet may be adjusted.

The plasma generation device 200 having the above-described structure generates plasma between the separation sheet 20 and the main body 221 due to a mutual reaction of the metal member provided in the roller part 210 installed on the guide member 223 of the plasma generator 220 to transfer the plurality of electrode members 222 and the separation sheet 20. Here, the plasma may be generated on only the surface of the separation sheet 20 disposed between the electrode member 222 and the metal member 212 to form the patterned adhesive layer 21 on the surface of the separation sheet 20.

Here, the plurality of electrode members 222 may slidably move along the guide groove 223a of the guide member 223 in the width direction of the separation sheet 20, and as a result, the adhesive layer 21 to be formed on the separation sheet 20 may be adjusted in position.

In the separation sheet 20 on which the adhesive layer is formed as described above, the radical unit 10 is disposed on the surface of the separation sheet 20 while passing through the disposition device 300. Here, the radical unit 10 pattern-adheres to the radical unit 10 and the separation sheet 20 while adhering to the patterned adhesive layer 21. That is, the adhesion may be improved through the adhesion surface between the radical unit 10 and the separation sheet 20, and the electrolyte impregnation property and the gas discharge property may be improved through the non-adhesion surface between the radical unit 10 and the separation sheet 20.

Therefore, in the facility for manufacturing the electrode assembly according to the first embodiment of the present invention, the plasma generation device 200 may be improved to manufacture the electrode assembly having the improved electrolyte impregnation property and gas discharge property.

In the plasma generation device 200, the electrode member 222 has a structure with ease of manufacture and installation. That is, the electrode member 222 includes a coupling part 222a slidably coupled to the guide groove 223a of the guide member 223, an electrode part 222b generating plasma while corresponding to the metal member 212 to form the patterned adhesive layer 21 on the surface of the separation sheet 20, and a connection part 222c connecting the coupling part 222a to the electrode part 222b. In the electrode member 222 having the above-described structure, only a portion corresponding to the metal member 212 may be formed as the electrode part 222c to significantly reduce costs, and a portion coupled to the guide member 223 may be formed as the coupling part 222a having strength to improve a coupling property with the guide member 223. In addition, the connection part 222c connecting the coupling part 222a to the electrode part 222b may be minimized in size and diameter to minimize a weight and costs.

Particularly, the connection part 222c may be detachably coupled to the electrode part 222b or the coupling part. That is, the connection part 222c may be inserted into the coupling groove formed in the electrode part 222b or the groove formed in the coupling part so as to be coupled. Thus, when the electrode part 222b is damaged, since only the connection part 222c coupled to the coupling part or the electrode part 222b coupled to the connection part needs to be separated, costs for the maintenance may be reduced.

The guide member 223 and the electrode member 222 may have a coupling structure that is capable of being easily fixed and released. That is, the guide groove 223a includes a first groove 223a-1 provided outside (left and right surfaces of the guide member when viewed in FIG. 6) the guide member 223 and a second groove 223a-2 provided inside the guide member 223, connected to the first groove 223a-1, and having a diameter greater than that of the first groove 223a-1 in the vertical direction when viewed in FIG. 6. Also, the coupling part 222a includes a support piece 222a-1 which is supported by the guide member 223 and to which the connection part 222c is connected, a coupling bolt 222a-2 inserted up to the second groove 223a-2 via the first groove 223a-1 by passing through the support piece 222a-1, and a coupling nut 222a-3 coupled to the coupling bolt 222a-2 disposed in the second groove 223a-2.

Thus, in the coupling part 222a, when the coupling bolt 222a-2 and the coupling nut 222a-3 are coupled to each other, the support piece 222a-1 may be pressed to the guide member 223 and thus fixed to the guide member 223 without movement, and as a result, the position of the electrode part may be fixed. Also, when the coupling of the coupling bolt 222a-2 and the coupling nut 222a-3 is partially released or completely released, the fixing of the support piece 222a-1 fixed to the guide member 223 may be released to allow the support piece 222a-1 to move in the width direction of the separation sheet within the first groove 223a-1, and as a result, the electrode part may move in the width of the separation sheet. Thereafter, when the coupling bolt 222a-2 and the coupling nut 222a-3 are coupled, the support piece 222a-1 may be pressed to the guide member 223 to fix the position of the electrode part.

The second groove 223a-2 is formed to pass in a lateral direction (a longitudinal direction of the guide member when viewed in FIG. 6) of the guide member 223 corresponding to the width direction of the separation sheet 20 so that the coupling nut 222a-3 is inserted therein. Thus, the coupling nut 222a-3 may be easily inserted into the second groove 223a-2.

The main body 221 may further include a support part 221a supporting the electrode part 222b. The support part 221a may support the surface of the electrode part 222b facing the transfer roller 211, and thus, the support part 221a may increase in fixing force. Particularly, the support part 221a is formed to be elongated in the width direction of the separation sheet and is formed to have a curved surface corresponding to the transfer roller 211. Thus, the support part 221a formed to have the curved surface corresponding to the transfer roller may be stably supported, and in particular, the support part 221a may stably move in the width direction of the separation sheet.

A display member 224 on which a scale is displayed in the width direction of the separation sheet 20 may be provided on a surface (a front surface when viewed in FIG. 6) of the guide member 223 on which the support piece 222a-1 is supported. Thus, a moving distance of the support piece 222a-1 may be accurately calculated. Particularly, the scale is formed symmetrically in left and right directions with respect to a center line that equally divides the display member 224, and thus, the electrode member may be symmetrically positioned at the left and right sides of the guide member with respect to the center line that equally divides the width of the guide member.

Hereinafter, in description of other embodiments of the present invention, the same constituent symbols are used for constituent symbols having the same configuration as the above-described embodiments, and redundant descriptions will be omitted.

### [Plasma generation device according to second embodiment of the present invention]

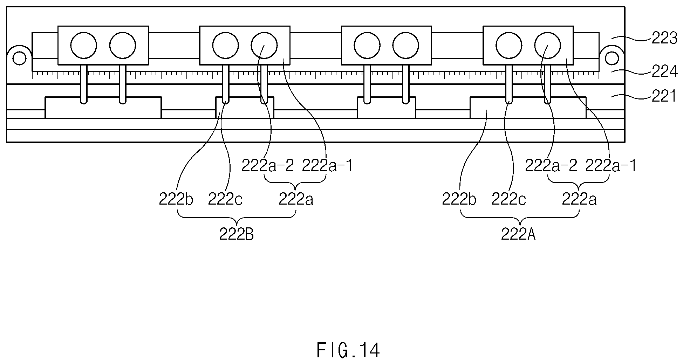

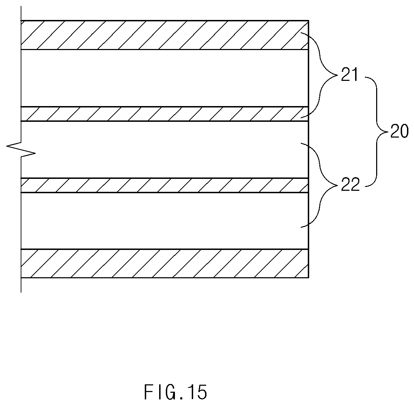

As illustrated in FIGS. 14 and 15, a plasma generation device 200 according to a second embodiment of the present invention includes a plurality of electrode members 222, and each of the electrode members 222 includes a coupling part, an electrode part, and a connection part.

The plurality of electrode members 222 may be provided in two types having different lengths when viewed in a width direction of a separation sheet 20.

For example, the plurality of electrode members 222 include a first electrode member 222A disposed at each of both ends of a main body 221 in the width direction of the separation sheet 20 and a second electrode member 222B provided between the first electrode members 222A. The first electrode member 222A has a length greater than that of the second electrode member 222B in the width direction of the separation sheet 20. Thus, in the plasma generation device 200 according to the second embodiment of the present invention, as illustrated in FIG. 15, adhesive layers having different widths may be formed on a surface of the separation sheet.

In the plasma generation device 200 according to the second embodiment of the present invention, only an electrode part of the first electrode member 222A and an electrode part of the second electrode member 222B may have sizes different from each other when viewed in the width direction of the separation sheet 20. Thus, the adhesive layers having different widths may be formed on the surface of the separation sheet 20 by the first electrode member 222A and the second electrode member 222B.

Accordingly, the scope of the present invention is defined by the appended claims.

### [Description of the Symbols]

100: Supply device
200: Plasma generation device
210: Roller part
211: Transfer roller
212: Metal member
220: Plasma generator
221: Main body
221a: Support part
222: Electrode member
222a: Coupling part
222a-1: Support piece
222a-2: Coupling bolt
222a-3: Coupling nut
222b: Electrode part
222C: Connection part
223: Guide member
223a: Guide groove
223a-1: First groove
223a-2: Second groove
224: Display member
225: Fixing member

## Claims

1. A plasma generation device (200), which forms a patterned adhesive layer (21) on a surface of a separation sheet (20), the plasma generation device (200) comprising:
a roller part (210) comprising a transfer roller (211) configured to transfer the separation sheet (20) and a metal member (212) embedded in the transfer roller (211); and
a plasma generator (220) comprising a main body (221) disposed to be spaced apart from the transfer roller (211) and provided to be elongated in a width direction of the separation sheet (20), which is perpendicular to a transfer direction of the separation sheet (20), a plurality of electrode members (222) disposed in the width direction of the separation sheet (20) and configured to generate plasma on only a surface of the separation sheet (20), which is disposed at a position facing the metal member (212), to form the patterned adhesive layer (21) on the surface of the separation sheet (20), and a guide member (223) configured to fix the plurality of electrode members (222) to the main body (221),
wherein the guide member (223) is detachably coupled to the main body (221) to fix or separate the plurality of electrode members (222) to/from the main body (221) at the same time.

2. The plasma generation device (200) of claim 1, wherein the plurality of electrode members (222) are slidably movably coupled to the guide member (223) in the width direction of the separation sheet (20).

3. The plasma generation device (200) of claim 1, wherein a guide groove (223a) to which the plurality of electrode members (222) are slidably movably coupled in the width direction of the separation sheet (20) is formed in an outer surface of the guide member (223).

4. The plasma generation device (200) of claim 3, wherein each of the electrode member (222) comprises:
a coupling part (222a) slidably coupled to the guide groove (223a) of the guide member (223);
an electrode part (222b) configured to generate the plasma on only a surface of the separation sheet (20) disposed at the position facing the metal member (212); and
a connection part (222c) configured to connect the coupling part (222a) to the electrode part (222b).

5. The plasma generation device (200) of claim 4, wherein the connection part (222c) is detachably coupled to the coupling part (222a).

6. The plasma generation device (200) of claim 4, wherein the guide groove (223a) comprises:
a first groove (223a-1) provided in an outer surface of the guide member (223); and
a second groove (223a-2) provided inside the guide member (223) and connected to the first groove (223a-1), wherein the second groove (223a-2) has a diameter greater than that of the first groove (223a-1),
wherein the coupling part (222a) comprises:
a support piece (222a-1) which is supported by the guide member (223) and to which the connection part (222c) is connected;
a coupling bolt (222a-2) inserted up to the second groove (223a-2) via the first groove (223a-1) by passing through the support piece (222a-1); and
a coupling nut (222a-3) inserted into the second groove (223a-2) and coupled to the coupling bolt (222a-2).

7. The plasma generation device (200) of claim 6, wherein the second groove (223a-2) is formed to pass in a lateral direction of the guide member (223), which correspond to the width direction of the separation sheet (20), so that the coupling nut (222a-3) is inserted.

8. The plasma generation device (200) of claim 4, wherein the main body (221) further comprises a support part (221a) configured to support the electrode part (222b),
wherein the support part (221a) is formed to be elongated in the width direction of the separation sheet (20) and is formed to have a curved surface corresponding to the transfer roller (211).

9. The plasma generation device (200) of claim 6, wherein a display member (224) on which a scale is displayed in the width direction of the separation sheet (20) is provided on a surface of the guide member (223), and
the support piece (222a-1) is adjusted in position according to the scale of the display member (224).

10. The plasma generation device (200) of claim 1, wherein the plurality of electrode members (222) comprise:
a first electrode member (222A) disposed on each of both ends of the main body (221) in the width direction of the separation sheet (20); and
a second electrode member (222B) provided between the first electrode member (222A)s (222),
wherein the first electrode member (222A) and the second electrode member (222B) have lengths different from each other when viewed in the width direction of the separation sheet (20).

11. The plasma generation device (200) of claim 10, wherein the first electrode member (222A) has a length greater than that of the second electrode member (222B).

12. The plasma generation device (200) of claim 4, wherein the main body (221) is made of a non-metal material, and
the electrode part (222b) is provided as a corona discharge electrode.

13. The plasma generation device (200) of claim 4, wherein the connection part (222c) is provided in two or more and has a cross-section having a circular rod shape.

14. A facility for manufacturing an electrode assembly, the facility comprising:
a supply device (100) configured to supply a separation sheet (20);
a plasma generation device (200) provided according to claim 1, configured to form a patterned adhesive layer (21) on a surface of the separation sheet (20) supplied by the supply device (100);
a disposition device (300) disposing a radical unit (10) on the surface of the separation sheet (20), on which the adhesive layer is formed, so that the separation sheet (20) and the radical unit (10) pattern-adhere to each other;
a lamination device (400) configured to press the separation sheet (20) and the radical unit (10) to be bonded to each other; and
a folding device (500) configured to fold the separation sheet (20), on which the radical unit (10) is disposed, to stack the radical unit (10) vertically.

## Patentansprüche

1. Plasmaerzeugungsvorrichtung (200), die eine strukturierte Haftschicht (21) auf einer Oberfläche einer Trennfolie (20) bildet, wobei die Plasmaerzeugungsvorrichtung (200) aufweist:
ein Walzenteil (210), das eine Transferwalze (211), die konfiguriert ist, die Trennfolie (20) zu übertragen, und ein Metallelement (212) aufweist, das in der Übertragungswalze (211) eingebettet ist; und
einen Plasmagenerator (220), der einen Hauptkörper (221), der angeordnet ist, um von der Übertragungswalze (211) beabstandet zu sein, und vorgesehen ist, um in einer Breitenrichtung der Trennfolie (20) verlängert zu sein, die senkrecht zu einer Übertragungsrichtung der Trennfolie (20) ist, mehrere Elektrodenelemente (222), die in der Breitenrichtung der Trennfolie (20) angeordnet sind und konfiguriert sind, Plasma nur auf einer Oberfläche der Trennfolie (20) zu erzeugen, die an einer Position angeordnet ist, die dem Metallelement (212) zugewandt ist, um die strukturierte Haftschicht (21) auf der Oberfläche der Trennfolie (20) zu bilden, und ein Führungselement (223) aufweist, das konfiguriert ist, die mehreren Elektrodenelemente (222) an dem Hauptkörper (221) zu befestigen,
wobei das Führungselement (223) lösbar mit dem Hauptkörper (221) gekoppelt ist, um die mehreren Elektrodenelemente (222) gleichzeitig an dem Hauptkörper (221) zu befestigen oder von diesem zu trennen.

2. Plasmaerzeugungsvorrichtung (200) nach Anspruch 1, wobei die mehreren Elektrodenelemente (222) in der Breitenrichtung der Trennfolie (20) gleitend beweglich mit dem Führungselement (223) gekoppelt sind.

3. Plasmaerzeugungsvorrichtung (200) nach Anspruch 1, wobei eine Führungsnut (223a), mit der die mehreren Elektrodenelemente (222) in der Breitenrichtung der Trennfolie (20) gleitend beweglich gekoppelt sind, in einer Außenfläche des Führungselements (223) ausgebildet ist.

4. Plasmaerzeugungsvorrichtung (200) nach Anspruch 3, wobei jedes der Elektrodenelemente (222) aufweist:
ein Kopplungsteil (222a), das gleitend mit der Führungsnut (223a) des Führungselements (223) gekoppelt ist;
ein Elektrodenteil (222b), das konfiguriert ist, das Plasma nur auf einer Oberfläche der Trennfolie (20) zu erzeugen, die an der Position angeordnet ist, die dem Metallelement (212) zugewandt ist; und
ein Verbindungsteil (222c), das konfiguriert ist, das Kopplungsteil (222a) mit dem Elektrodenteil (222b) zu verbinden.

5. Plasmaerzeugungsvorrichtung (200) nach Anspruch 4, wobei das Verbindungsteil (222c) lösbar mit dem Kopplungsteil (222a) gekoppelt ist.

6. Plasmaerzeugungsvorrichtung (200) nach Anspruch 4, wobei die Führungsnut (223a) aufweist:
eine erste Nut (223a-1), die in einer Außenfläche des Führungselements (223) vorgesehen ist; und
eine zweite Nut (223a-2), die innerhalb des Führungselements (223) vorgesehen und mit der ersten Nut (223a-1) verbunden ist, wobei die zweite Nut (223a-2) einen Durchmesser aufweist, der größer als der der ersten Nut (223a-1) ist,
wobei das Kopplungsteil (222a) aufweist:
ein Stützstück (222a-1), das durch das Führungselement (223) gestützt wird und mit dem das Verbindungsteil (222c) verbunden ist;
einen Kopplungsbolzen (222a-2), der über die erste Nut (223a-1) bis zu der zweiten Nut (223a-2) eingesetzt ist, indem er durch das Stützstück (222a-1) hindurchgeht; und
eine Kopplungsmutter (222a-3), die in die zweite Nut (223a-2) eingesetzt und mit dem Kopplungsbolzen (222a-2) gekoppelt ist.

7. Plasmaerzeugungsvorrichtung (200) nach Anspruch 6, wobei die zweite Nut (223a-2) so ausgebildet ist, dass sie in einer seitlichen Richtung des Führungselements (223), die der Breitenrichtung der Trennfolie (20) entspricht, hindurchgeht, so dass die Kopplungsmutter (222a-3) eingesetzt ist.

8. Plasmaerzeugungsvorrichtung (200) nach Anspruch 4, wobei der Hauptkörper (221) ferner ein Stützteil (221a) aufweist, das konfiguriert ist, das Elektrodenteil (222b) zu stützen,
wobei das Stützteil (221a) so ausgebildet ist, dass es in der Breitenrichtung der Trennfolie (20) verlängert ist, und so ausgebildet ist, dass es eine gekrümmte Oberfläche aufweist, die der Übertragungswalze (211) entspricht.

9. Plasmaerzeugungsvorrichtung (200) nach Anspruch 6, wobei ein Anzeigeelement (224), auf dem eine Skala in der Breitenrichtung der Trennfolie (20) angezeigt wird, auf einer Oberfläche des Führungselements (223) vorgesehen ist, und
das Stützstück (222a-1) in der Position gemäß der Skala des Anzeigeelements (224) eingestellt ist.

10. Plasmaerzeugungsvorrichtung (200) nach Anspruch 1, wobei die mehreren Elektrodenelemente (222) aufweisen:
ein erstes Elektrodenelement (222A), das an jedem der beiden Enden des Hauptkörpers (221) in der Breitenrichtung der Trennfolie (20) angeordnet ist; und
ein zweites Elektrodenelement (222B), das zwischen den ersten Elektrodenelementen (222A) vorgesehen ist,
wobei das erste Elektrodenelement (222A) und das zweite Elektrodenelement (222B) Längen aufweisen, die sich voneinander unterscheiden, wenn sie in der Breitenrichtung der Trennfolie (20) betrachtet werden.

11. Plasmaerzeugungsvorrichtung (200) nach Anspruch 10, wobei das erste Elektrodenelement (222A) eine Länge aufweist, die größer als die des zweiten Elektrodenelements (222B) ist.

12. Plasmaerzeugungsvorrichtung (200) nach Anspruch 4, wobei der Hauptkörper (221) aus einem Nichtmetallmaterial hergestellt ist, und
das Elektrodenteil (222b) als eine Koronaentladungselektrode vorgesehen ist.

13. Plasmaerzeugungsvorrichtung (200) nach Anspruch 4, wobei das Verbindungsteil (222c) in zwei oder mehr vorgesehen ist und einen Querschnitt aufweist, der eine kreisförmige Stabform aufweist.

14. Anlage zum Herstellen einer Elektrodenanordnung, wobei die Anlage aufweist:
eine Zuführvorrichtung (100), die konfiguriert ist, eine Trennfolie (20) bereitzustellen;
eine Plasmaerzeugungsvorrichtung (200), die nach Anspruch 1 vorgesehen ist, die konfiguriert ist, eine strukturierte Haftschicht (21) auf einer Oberfläche der Trennfolie (20) zu bilden, die durch die Zuführvorrichtung (100) bereitgestellt wird;
eine Anordnungsvorrichtung (300), die eine Radikaleinheit (10) auf der Oberfläche der Trennfolie (20) anordnet, auf der die Haftschicht gebildet ist, so dass die Trennfolie (20) und die Radikaleinheit (10) strukturmäßig aneinander haften;
eine Laminierungsvorrichtung (400), die konfiguriert ist, die Trennfolie (20) und die Radikaleinheit (10) zu pressen, um miteinander verbunden zu werden; und
eine Faltvorrichtung (500), die konfiguriert ist, die Trennfolie (20), auf der die Radikaleinheit (10) angeordnet ist, zu falten, um die Radikaleinheit (10) vertikal zu stapeln.

## Revendications

1. Dispositif de génération de plasma (200) formant une couche adhésive à motif (21) sur une surface d'une feuille de séparation (20), le dispositif de génération de plasma (200) comprenant :
une partie de rouleau (210) comprenant un rouleau de transfert (211) configuré pour transférer la feuille de séparation (20) et un élément métallique (212) intégré dans le rouleau de transfert (211) ; et
un générateur de plasma (220) comprenant un corps principal (221) disposé afin d'être espacé du rouleau de transfert (211), et agencé pour être allongé dans le sens de la largeur de la feuille de séparation (20), qui est perpendiculaire à un sens du transfert de la feuille de séparation (20), une pluralité d'éléments d'électrodes (222) disposés dans le sens de la largeur de la feuille de séparation (20) et configurés pour générer du plasma uniquement sur une surface seulement de la feuille de séparation (20), qui est disposée dans une position faisant face à l'élément métallique (212), pour former la couche adhésive à motif (21) sur la surface de la feuille de séparation (20), et un élément de guidage (223) configuré pour fixer la pluralité d'éléments d'électrodes (222) au corps principal (221),
l'élément de guidage (223) étant couplé de façon amovible au corps principal (221) pour fixer ou séparer la pluralité d'éléments d'électrode (222) vers/depuis le corps principal (221) simultanément.

2. Dispositif de génération de plasma (200) selon la revendication 1, la pluralité d'éléments d'électrodes (222) étant couplés de façon coulissante et mobile à l'élément de guidage (223) dans le sens de la largeur de la feuille de séparation (20).

3. Dispositif de génération de plasma (200) selon la revendication 1, une cannelure de guidage (223a), à laquelle la pluralité d'éléments d'électrodes (222) sont couplés de façon coulissante et mobile dans le sens de la largeur de la feuille de séparation (20), étant formée dans une surface extérieure de l'élément de guidage (223).

4. Dispositif de génération de plasma (200) selon la revendication 3, chacun des éléments d'électrodes (222) comprenant :
un élément de couplage (222a) couplé de façon coulissante à la cannelure de guidage (223a) de l'élément de guidage (223) ;
une pièce d'électrode (222b) configurée pour générer le plasma uniquement sur une surface de la feuille de séparation (20) disposée dans la position faisant face à l'élément métallique (212) ; et
un élément de connexion (222c) configuré pour relier l'élément de couplage (222a) à la pièce d'électrode (222b).

5. Dispositif de génération de plasma (200) de la revendication 4, l'élément de connexion (222c) étant couplé de façon amovible à l'élément de couplage (222a).

6. Dispositif de génération de plasma (200) selon la revendication 4, la cannelure de guidage (223a) comprenant :
une première cannelure (223a-1) agencée dans une surface extérieure de l'élément de guidage (223) ; et
une deuxième cannelure (223a-2) agencée à l'intérieur de l'élément de guidage (223), et connectée à la première cannelure (223a-1), le diamètre de la deuxième cannelure (223a-2) étant supérieur à celui de la première cannelure (223a-1),
l'élément de couplage (222a) comprenant :
une pièce de support (222a-1) supportée par l'élément de guidage (223) et à laquelle l'élément de connexion (222c) est relié ;
un boulon d'accouplement (222a-2) inséré jusqu'à la deuxième cannelure (223a-2) via la première cannelure (223a-1) en passant par la pièce de support (222a-1) ; et
un écrou d'accouplement (222a-3) inséré dans la deuxième cannelure (223a-2) et couplé au boulon d'accouplement (222a-2).

7. Dispositif de génération de plasma (200) selon la revendication 6, la deuxième cannelure (223a-2) étant formée pour passer dans une direction latérale de l'élément de guidage (223) correspondant au sens de la largeur de la feuille de séparation (20), afin que l'écrou d'accouplement (222a-3) soit inséré.

8. Dispositif de génération de plasma (200) selon la revendication 4, le corps principal (221) comprenant en outre un élément de support (221a) configuré pour supporter la pièce d'électrode (222b),
l'élément de support (221a) étant allongé dans le sens de la largeur de la feuille de séparation (20), et formé de façon à posséder une surface courbe correspondant au rouleau de transfert (211).

9. Dispositif de génération de plasma (200) selon la revendication 6, un élément d'affichage (224), sur lequel est affichée une échelle dans le sens de la largeur de la feuille de séparation (20), étant agencé sur une surface de l'élément de guidage (223), et
la pièce de support (222a-1) étant ajuste en fonction de l'échelle de l'élément d'affichage (224).

10. Dispositif de génération de plasma (200) selon la revendication 1, la pluralité d'éléments d'électrodes (222) comprenant :
un premier élément d'électrode (222A) disposé à chacun des deux bouts du corps principal (221) dans le sens de la largeur de la feuille de séparation (20) ; et
un deuxième élément d'électrode (222B) agencé entre les premiers éléments d'électrode (222A),
le premier élément d'électrode (222A) et le deuxième élément d'électrode (222B) présentant des longueurs différentes vus dans le sens de la largeur de la feuille de séparation (20).

11. Dispositif de génération de plasma (200) selon la revendication 10, la longueur du premier élément d'électrode (222A) étant supérieure à celle du deuxième élément d'électrode (222B).

12. Dispositif de génération de plasma (200) selon la revendication 4, le corps principal (221) étant constitué d'un matériau non métallique, et
la pièce d'électrode (222b) étant agencée comme une électrode à décharge corona.

13. Dispositif de génération de plasma (200) selon la revendication 4, l'élément de connexion (222c) étant agencé par deux ou davantage, et possédant une section transversale en forme de tige circulaire.

14. Installation de fabrication d'un ensemble d'électrodes, l'installation comprenant :
un dispositif de distribution (100) configuré pour fournir une feuille de séparation (20) ;
un dispositif de génération de plasma (200) agencé selon la revendication 1, configuré pour former une couche adhésive à motif (21) sur une surface de la feuille de séparation (20) fournie par le dispositif de distribution (100) ;
un dispositif de disposition (300) assurant la disposition d'une unité radicale (10) sur la surface de la feuille de séparation (20), sur laquelle la couche adhésive est formée, de sorte que la feuille de séparation (20) et l'unité radicale (10) adhèrent l'une à l'autre par le motif ;
un dispositif de stratification (400) configuré pour presser la feuille de séparation (20) et l'unité radicale (10) devant être assemblées l'une à l'autre ; et
un dispositif de pliage (500) configuré pour plier la feuille de séparation (20) sur laquelle est disposée l'unité radicale (10), afin d'empiler verticalement l'unité radicale (10).
